# EUROPEAN PATENT APPLICATION

(11) **EP 3 909 429 A1**
(43) Date of publication of application: **17.11.2021**
(21) Application number: 20174900.9
(22) Date of filing: 15.05.2020
(51) Int. Cl.: A21D 2/18, A21D 2/26, A21D 8/04, A21D 13/064

(54) **FATTY AERY BREAD DOUGH**

(71) Applicant: Institut Polytechnique Unilasalle, 60000 Beauvais (FR)
(72) Inventor: BRANCHU, Julie, 60000 Beauvais (FR); BUCHE, Cécile, 60000 Beauvais (FR); BUCHE, François, 60000 Beauvais (FR)
(74) Representative: Cabinet Camus Lebkiri

(57) **Abstract**

The invention relates to a fatty aery bread and its dough with a low firmness in view of its quantity of sugar and fat. In particular, the fatty aery bread dough comprises : flour, butter, eggs, sugar, yeast, salt and liquid like water or milk and filling agents comprising pregelatinized starch or/and vegetal proteins with prolamins natives free

## Description

### TECHNICAL FIELD

The present invention relates to fatty aery bread and its bake dough. The fatty aery bread can be brioche, milk roll, it is based from a fatty fermented cereal dough.

### BACKGROUND

It is known industrial brioches and traditional prepackaged brioches contain flour, butter, eggs, sugar, yeast, salt and water or milk.

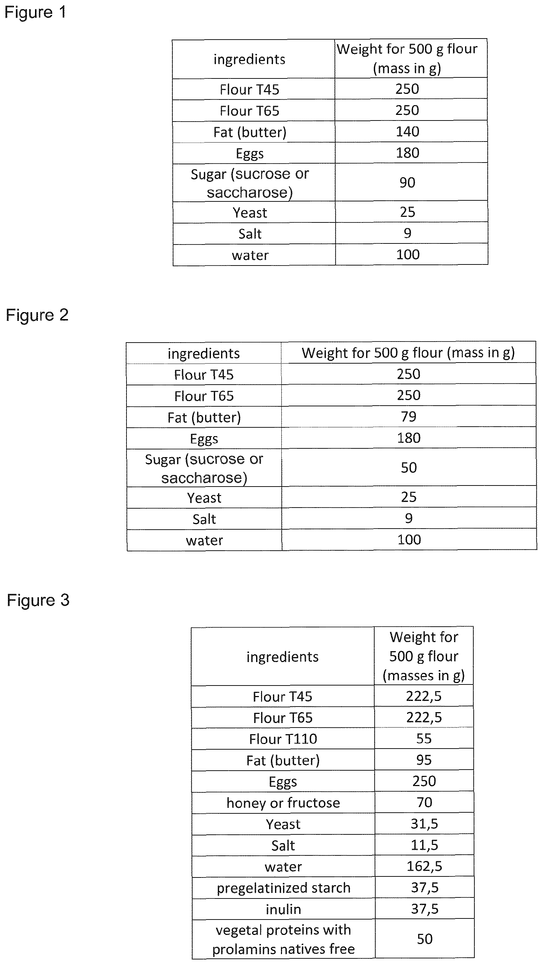

Figure 1 shows the weight of ingredients of a fatty fermented cereal dough, particularly a brioche dough control sample for 500 g of flour, hereafter referred to as the control sample to make industrial or artisanal brioche.

It is known that nutrition grades enable the consumer to know the nutritional quality of a product. The brioches have a poor nutrition grade. For example, the nutrition grade for this control sample from a calculation by Nutri-Score® is "D"

It is known that in brioches, and hence brioche doughs, the higher the percentages of mass of sugar and fat (for example butter) are, the lower of nutrition grade is. Therefore, a simple solution is to reduce the percentage of sugar and fat, as shown in figure 2, representing the control sample when reducing sugar and fat by 30%.

However, each ingredient has a role in the texture and taste of a fatty aery bread . A fatty aery bread needs to have a texture which depends on properties like, firmness and elasticity. Particularly, it is known that the more a brioche has a low poor firmness the more the crumb of the brioche is aired and the more the sensation of its texture of a brioche is appreciated.

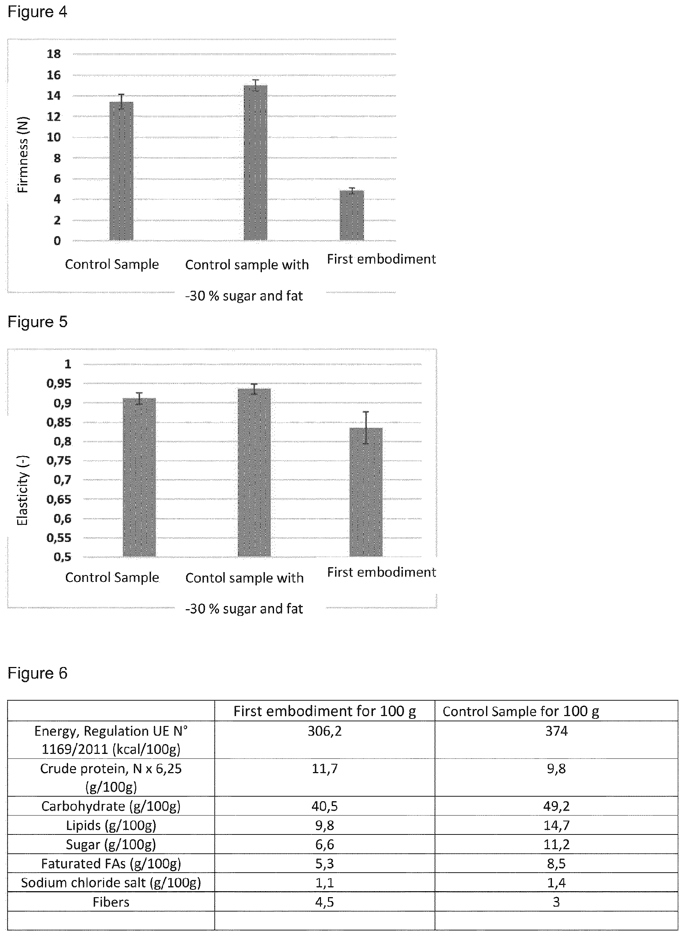

Sugar and fat both allow to reduce the firmness. Figure 4 shows the representation of a graphic of firmness in Newtown of a brioche baked according to the ingredients of the control sample and from a second control sample when reducing sugar and fat by 30% in view of the first control sample. We can see on figure 4 that when reducing sugar and fat by 30% for a control sample, the firmness increased by 11%.

Therefore, we need to obtain a brioche with a better nutrition grade by keeping or improving its texture, particularly the firmness.

### SUMMARY OF THE INVENTION

The invention allows to have a fatty aery bread like brioche with a better nutrition grade by keeping or improve its texture, in particular the firmness by comprising a filling agent comprising pregelatinized starch or/and vegetal proteins with prolamins natives free.

An object of the present invention is a fatty aery bread dough comprising vegetal flour with natural prolamins, fat as ingredient, sweetener, fermenting agent like yeast or leaven, salt and water or lactose liquid and filling agents powder to replace the vegetal flour, the filling agent powder comprising pregelatinized starch or/and vegetal proteins with prolamins natives free.

Indeed, the filling agent comprising pregelatinized starch or/and vegetal proteins with prolamins natives free is without capacity to make a gluten network, allows the elasticity and stillness to be improved and thus to reduce the proportion (mass percentage) of fat like butter and sweetener like sugar with fatty aery bread texture.

In addition to the characteristics mentioned in the above paragraphs, the dough according to one aspect of the invention may have one or more complementary characteristics among the following, considered individually or according to all the technically possible combinations:

According to one embodiment, the filling agent consist of pregelatinized starch or/and vegetal proteins with prolamins natives free. This filling agent allows the elasticity and stillness to be improved and thus to reduce the proportion (mass percentage) of fat like butter and sweetener like sugar with fatty aery bread texture.

According to a one embodiment, the filling agents comprise in mass more vegetal proteins with prolamins natives free than pregelatinized starch, for example 43 % of pregelatinized starch and 77 % in mass of vegetal proteins with prolamins natives free.

According to one example of this embodiment, the ratio of filling agent/fiber vegetable of type polysaccharides like inulin, is between 2 and 3, for example 2.3. In particular the ratio of pregelatinized starch/ fiber vegetable of type polysaccharides like inulin is 1.

According to another embodiment, the filling agents comprise in mass more of pregelatinized starch than vegetal proteins with prolamins natives free. For example, the filling agents comprise 70% of pregelatinized starch and 30% of vegetal proteins with prolamins natives free. According to one example of this embodiment, the fatty aery bread comprises fiber vegetal of type polysaccharides like inulin and the ratio of filling agent/ fiber vegetal of type polysaccharides, is between 2 and 3, for example 2.3. In particular the ratio of vegetal proteins with prolamins natives free / fiber vegetal of type polysaccharides like inulin, is 1.

In these embodiments, the vegetal proteins with prolamins natives free and pregelatinized starch allows to do the function of flavor in the fatty aery bread texture like brioche texture. In these examples, the mix of these agents allow unexpectedly to reduce fat ingredient.

According to another embodiment, the filling agents comprises 100% in mass of vegetal proteins with prolamins natives free and the dough comprises fiber vegetal of type polysaccharides like inulin. For example, the mass ratio of filing agent/fiber vegetal of type polysaccharides is between 1.5 and 2.5 for example 2.

According to another embodiment, the filling agents comprises at least 50% in mass of pregelatinized starch for example 100% in mass of pregelatinized starch, and the dough comprises fiber vegetal of type polysaccharides like inulin. For example, the mass ratio of filing agent/fiber vegetal of type polysaccharides is between 1.5 and 2.5 for example 2.

In these both last embodiments, the fiber vegetal allows to do the function of the sugar in the fatty aery bread texture like brioche texture. As a consequence, the inulin allows to reduce the proportion of sugar. And the mix of fiber vegetal and filling agent allow to reduce sugar and fat by keeping fatty aery bread texture.

According to one embodiment, the mass ratio of vegetal flour with natural prolamins /fat is between 4,5 and 6, for example 5.2. For example, in a traditional brioche dough, the ratio is about 3,5.

In one embodiment the fat is butter.

In another embodiment, the fat is vegetable oil.

According to one embodiment, the mass ratio of vegetal flour with natural prolamins /sweetener is between 6,5 and 8, for example 7,1. For example, in a traditional brioche dough, the ratio is about 5,5.

According to one embodiment, the sweetener is sugar.

According to one example of this embodiment, the sugar is honey or fructose. Fructose is a monosaccharide and sucrose are a disaccharide, meaning that fructose is made of a single sugar unit, while sucrose is made of two sugar units. Sugar has a higher the glycemic index (GI) than honey, which means that it raises blood sugar levels more quickly. This is due to its higher fructose content and to the absence of trace minerals. But honey is slightly more caloric than sugar, although it is sweeter. Therefore, less honey may be required.

According to one embodiment, the fatty aery bread dough comprises have fibers vegetal of type polysaccharides like inulin, the fiber vegetal is an ingredient having the sugar function for the texture but without to be sweetener.

According one example of this embodiment, the mass ratio of vegetal flour with natural prolamins /ingredients having sugar function for texture like sugar and fibers vegetal of type polysaccharides, is between 4 and 5, for example 4.6. For example, in a traditional brioche dough, the ratio is about 5,5.

According to one embodiment, the mass ratio of dough mass/ ingredients having sugar function for the texture like sugar and inulin, is between 20 and 28 for example 24.2.

According to one embodiment, the fatty aery bread dough comprises vitellus (egg yolk) or/and albumin (egg white).

According to one example of this embodiment, the mass ratio of vegetal flour with natural prolamins / vitellus (egg yolk) or/and albumin (egg white) is between 1,5 and 2,5.

According to one example of this embodiment, vitellus (egg yolk) or/and albumin (egg white) is a fresh egg.

According to another example vitellus (egg yolk) or/and albumin (egg white) is egg product liquid or egg product powder.

According to one embodiment, the mass ratio of vegetal flour with natural prolamins /filling agents is between 2 and 10, for example between 5 and 6.5 for example 5.7.

Unexpectedly, the mixture of vegetal proteins at 0% native prolamins and of pregelatinized starch have an effect to reduce the firmness and improve elasticity. This is unexpected because cereals are composed of sugar (starch) and protein (like gluten). Gluten comprises prolamins comprising glutenin HPM + glutenin FPM + Gliadin. Thus, the fact to mix pregelatinized starch and proteins at 0% native prolamins for example from protein crops, seems to be similar to add cereals without the prolamins. But cereals without the prolamins like oat or rice or have not the same effect than this mixture.

For example, the percentage by weight of vegetal proteins with prolamins natives free is equal or more than pregelatinized starch, for example between 1,2 and 1,5 more than the pregelatinized starch.

According to one embodiment, vegetal proteins at 0% native prolamins belong to the Papilionaceae protein family, for instance pea protein, bean protein, broad bean protein, horse bean protein, lentil protein, alfalfa protein, clover protein or lupine protein. For instance, pea protein having 80 to 90% isolate protein on dry extract. For example, the pea protein is a granulated powder like the powder Nutralys® FB.

According to one embodiment, the pregelatinized starch is a pregelatinized modified starch derived from waxy corn. For instance, the pregelatinized starch is a from a powder like Prégéflo® CH20 or Tang Zhong or precooked starch .

According to one embodiment, the vegetal flour is a wheat flour.

According to one example of this embodiment, the flour is a mixture of different wheat flour T45, T65 and T110, wherein T corresponds to a typical ash rate of the flour, in per ten thousand. For example, the incineration of 100 g of type 55 flour ("T55") produces approximately 0.55 g of mineral ash. This allow to increase the quantities of fibers in the final product in order to obtain a higher nutritional score.

According to one embodiment, the fermenting is yeast.

According to one embodiment the mass ratio of vegetal flour/fermenting is between 15 and 17, for example 15.8. For example, in a traditional brioche dough, the ratio is about 15.8. The invention allows to do not modify the proportion of fermentation.

According to one embodiment, the fatty aery bread dough is a brioche dough.

According to another embodiment, the fatty aery bread dough is a milk roll dough

The invention also relates to a fatty aery bread like brioche, prepared with the fatty aery bread dough of the invention with or without one or more complementary characteristics previously mentioned.

According to one embodiment, the fatty aery bread is a brioche.

The invention also relates to a method to produce the fatty aery bread dough comprising :
- a first step of kneading of vegetal flour with natural prolamins, sweetener, fermenting agent like yeast or leaven, salt and water or lactose liquid and filling agent powder to replace the vegetal flour comprising pregelatinized starch or/and vegetal proteins with prolamins natives free, during at least eight minutes,
- a second step of add fat as ingredient and kneading of the dough until that the butter is thoroughly incorporated into the dough,
- a third step of pointing: rest during 1 hour to 2 hours like 1h30, at a temperature between 24°C and 34°C with the air humidity between 50% and 85%, after the rest, creating a flap with the dough, and optionally rest the dough at the fresh air during 0h to 2h;
- a four step of shaping the dough,
- a five step of rising of the dough during 1h to 2h, at a temperature between 24°C to 34°C, with the air humidity between 50% and 85%, for example to 28°C during 1h30.

The fact to separate the butter of other ingredients allows to avoid the butter to interfere with the formation of a gluten network during the first step.

The filing agent allow to reduce or delate the delay of the rest of the dough in the fresh air. By fresh air, we understand between 1°C to 10°C, like in a fridge between 4°C to 5°C. The fact to add the filing agent allow to reduce the time of resting in fresh air which is for example for brioche dough around 12h.

For example the first step comprises a first tempering under step of the blend of ingredients at a first speed during 1 to 4 minutes, for example 3 minutes, a second tempering under step of the blend of ingredients at a second speed superior to the first speed during 6 to 10 minutes, for example 8 minutes, a third tempering under step of the blend of ingredients at a third speed superior to the second speed during 1 to 6 minutes, for example 4 minutes.

The invention also relates to a method to produce a product prepared with the fatty aery bread dough of the invention comprising a step of baking the fatty aery bread dough at 160°C with convection oven or 200°C with deck oven, during 10 to 1h minutes according the dough weight.

As a consequence, another advantage of this fatty aery bread dough is that the cooking time of the product (preparing the dough and bake it to obtain the product) is reduce in relation to prior art product and particularly for a product like a traditional brioche.

The invention and its various applications will be better understood by reading the following description and examining the accompanying figures.

### DESCRIPTION OF FIGURES

These are presented only as an indication and are in no way limitative of the invention. The figures show :
In Figure 1, a representation of a table showing ingredients and their weight to make a brioche dough according to a prior art.
In Figure 2, a representation of a table showing ingredients and their weight to make a brioche dough of the prior art without 30% of sugar and fat.
In Figure 3, a representation of a table showing ingredients and their weight to make a brioche dough according to the first embodiment.
In Figure 4 shows the representation of a graphic of firmness of brioches baked from different brioche doughs.
In Figure 5 shows the representation of a graphic of elasticity of brioches baked from different brioche doughs.
In Figure 6, a representation of a table shows the difference of characteristics between the control sample and the first embodiment.
In Figure 7, a representation of a table shows ingredients and their weight to make a brioche dough according to the second and the a third embodiments.
In Figure 8, shows the representation of a graphic of firmness of brioche baked from brioche dough different between the first, second and third embodiments.

### DESCRIPTION

In the description, around will be understood to mean at one value of the last figure of the decimal part, which are, for example: around 3.2 means 3.3 or 3.2 or 3.1.

In the description the fatty aery bread is a brioche but can be also a milk roll.

In the description, fat means the ingredient or ingredients which is (are) around to 100% fat and total fat means the combined value of the different types of fat, including saturated fat, polyunsaturated fat, and monounsaturated of all ingredients of the dough or fatty aery bread.

In the first embodiment, the fatty aery bread dough is a brioche dough which comprises vegetal flour with natural prolamins which is here wheat, fat which is here butter, sweetener comprising here sugar, fiber vegetal of type polysaccharides which is inulin, fermenting agent which is here yeast, salt and water and a filling agent comprising pregelatinized starch, vegetal proteins with prolamins natives free.

In this example, the filling agent consists of pregelatinized starch and vegetal proteins with prolamins natives free.

In this example, the brioche dough comprises also fibers vegetal of type polysaccharides which is inulin and also vitellus (egg yolk) or/and albumin (egg white) which is here fresh egg. The fiber vegetal of type polysaccharides is an ingredient as the sugar which have the same sugar function for the texture but the fiber vegetal is not sweetener. In this example, the fatty aery bread dough comprises water, but the water can be replaced by lactose liquid like fresh milk.

Figure 3 shows a table representation of ingredients and their weight to make a brioche dough which is a fatty cereal bread dough to ferment to be airy and soft according to the first embodiment. In this figure, the weight of each ingredient corresponds to 500 grams of flour. For example, the brioche dough according to the first embodiment has a mass of 1240,5 grams for 500 grams of flour, whereas in the control sample, it has a mass of 1044 grams for 500 grams.

In this first embodiment, the flour comprises three types of flour, T45, T65 and T110 wherein T corresponds to a typical ash rate of the flour, in per ten thousand. In this example there is the same quantity of flours T45 and T65, here 222.5 grams and there is about four times less flour type T110 i.e. 55grams. Of course, it is possible to have only one or two types of flours.

In this first embodiment the mass ratio of flour/fat is between 4,5 and 6, and in particular here, the ratio is around 5.2, i.e. 95 grams for 500 grams of flour, wherein in the control sample the ratio is about 3,5, i.e. 140 grams.

Thus, in the first embodiment there is around less 32,1% of fat than in the control sample for 500 grams of flour. In this embodiment, there is 7.7 percent of fat for 1 kilogram of brioche dough, whereas there is 13.4 percent of fat in the control sample for 1 kilogram, which means 43 percent less of fat for 1Kilogram in this embodiment when compared to the control sample.

As a consequence, in view of figure 6, the ratio mass dough/ total fat is 10.2 or 9,8g total fat for 100g of dough wherein the control sample comprises a ratio mass dough/ total fat equal to 6.8 or 14.7g total fat for 100g of dough. As a consequence, there is 1/3 less total fat in this first embodiment than in the control sample.

Here the total fat comprises fat (butter) + fat in the egg, fat in the flour etc....

In this first embodiment, the sugar is honey and the ratio of flour/sugar is between 6,5 and 8, and in particular here, the ratio is around 7,1, i.e. 70 grams for 500 grams of flour, whereas in the control sample the ratio is about 5,5 , i.e. 90 grams. As the honey comprises 40 percent fructose and 30 percent glucose and 30% of remainder comprises mineral, water, pollen. So, in 70 grams of honey, there is 49 grams of sugar. So, there is 5.6 percent of honey and only 4 percent of sugar in this embodiment, whereas there is 8.6 percent of sugar in the control sample or above 50 percent less of sugar for 1Kilogram in this embodiment when compared to the control sample. As fructose is more 30% sweet than saccharose, to have the same sweet taste, there is need less 30% of honey.

In the control sample there is 90g of sugar for 1044g of dough or 86.2g of sugar for 1kg, in this first embodiment, there is 70g of sugar for 1245g of dough or 56.2g for 1kg. I.e. less 34.8 % of sugar than in the control sample.

The dough comprises also fiber vegetal which is here inulin. The inulin has the same sugar texture function than the sugar but without sweet taste (inulin is not a sweetener). The vegetal fiber, here the inulin is added to have less 30% of sugar for help to have the same texture sugar function than in the control sample.

The mass ratio of flour/ egg is between 1,5 and 2,5 here 2, i.e. 250 grams for 500 grams of flour, which is more than in the control sample comprising 180 grams of eggs (the ratio is around 2.78). There are more eggs than in the control sample because for 500 grams of flour the dough includes more ingredients requiring a binder. Indeed, there is in this embodiment 20,2% of eggs for 1 kilogram, whereas there are 17.2% of eggs for 1 kilogram in the control sample. But an excess of proportion egg increase firmness, but as indicated above, unexpectedly the first embodiment is less firmness than the control sample whereas it comprises more in percent by mass of eggs.

In this first embodiment, there are 31 grams of yeast or 2.5% of yeast for 1 kilogram, whereas there are 2.4% of yeast in the control sample.

In this first embodiment, there are 11.5 grams of salt for 500g of flour or around 0.9 % of salt for 1 kilogram which is similar in the control sample.

In this embodiment there are 87.5 grams of filling agent for 500 grams of flour or 7% of filling agent in 1 kilogram of dough.

In this first embodiment, the filling agent comprises 43% of pregelatinized starch or 37.5 grams for 500g of flour, and 67% of vegetal proteins with prolamins natives free or 50 grams for 500g of flour.

In this example there is vegetal fiber of type polysaccharides which is here inulin and the quantity is 37.5 grams for 500g of vegetal flour which is the same quantity than pregelatinized starch.

Figure 4 shows the firmness in Newtown of brioches baked from the different brioche doughs. The brioche doughs of the control sample, the control sample by reducing sugar and fat by 30% and according to the first embodiment are baked similarly. We can see that this brioche dough according to the first embodiment makes it possible to have a less firm brioche while that of the first control sample while has less sugar and less fat at contrary of the second control sample with less 30 % sugar and fat.

Figure 5 shows the elasticity of brioches baked from the different brioche doughs. The brioche doughs of the control sample, the control sample by reducing sugar and fat by 30% and according to the first embodiment are baked similarly. We can see that this brioche dough of the first embodiment makes it possible to have a better elasticity of brioche while that of the first control sample while has less sugar and less fat at contrary of the second control sample with less 30 % sugar and fat.

Figure 6 shows a representation of a table showing the difference of feature for 100 grams of brioche from the control sample and according to the first embodiment.

As the first embodiment comprises less fat and sugar, there is less energy, lipids, sugar, saturated FAs. There are more fibers in the embodiment due to inulin and flour T110.

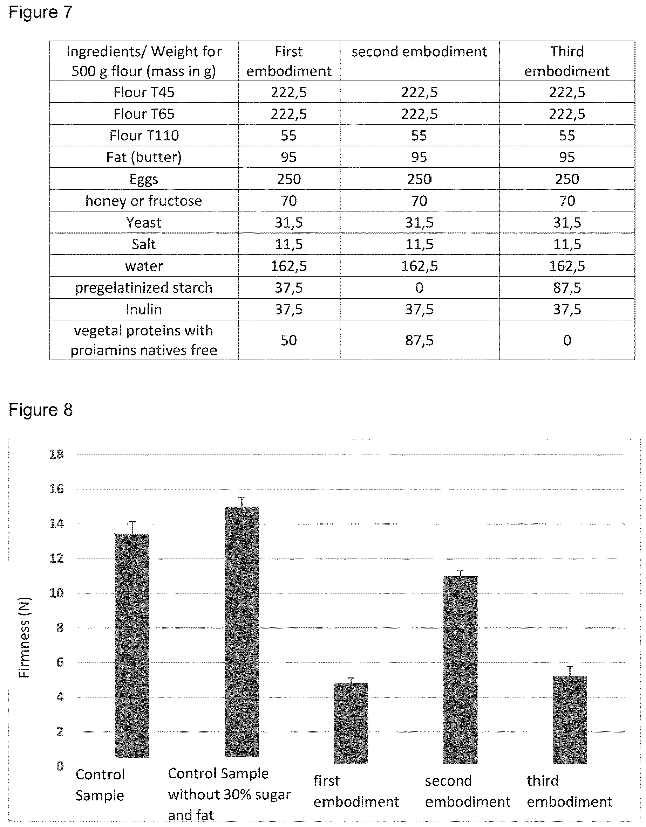

Figure 7 shows a table representation of ingredients and their weight to make a brioche dough according to a second and a third embodiments in relation to the first embodiment. In this figure 7 as the figures 1 and 2, the weight of each ingredient corresponds to 500grams of flour.

The difference between the second embodiment and the first embodiment is that the filling agent of the brioche dough comprises only vegetal proteins with prolamins natives free, i.e. without the pregelatinized starch. The proportion of ingredients of the brioche dough in this second embodiment is similar to the first embodiment except that the vegetal proteins with prolamins natives free comprise the portion of the pregelatinized starch of the first embodiment. I.e. the vegetal proteins with prolamins natives free comprise 87.5 grams for 500 grams of flour or 100% of filling agent.

On the contrary, the difference between the third embodiment and the first embodiment is that the filling agent of the brioche dough comprises only pregelatinized starch, i.e. without the vegetal proteins with prolamins natives free. The proportion of ingredients of the brioche dough in this third embodiment is similar to the first embodiment except that the pregelatinized starch comprises the portion of the vegetal proteins with prolamins natives free of the first embodiment. I.e. the pregelatinized starch comprises 87.5 grams for 500 grams of flour or 100% of filling agent.

Figure 8 shows the firmness of brioches baked from the different brioche doughs. The brioche doughs of the control sample, the control sample by reducing sugar and fat by 30%, the first embodiment, the second embodiment and the third embodiment are baked similarly. We can see that the brioche baked from the brioche dough of the second or third embodiment is less hard than the brioche baked from the brioche dough of the control sample while the brioche dough of the second or third embodiment has less sugar and less fat. Moreover, unexpectedly, the first embodiment is less hard than the second and third embodiments. So unexpectedly, the combination of pregelatinized starch and vegetal proteins with prolamins natives free allows together to reduce the firmness of brioche.

## Claims

1. Fatty aery bread dough comprising: vegetal flour with natural prolamins, fat as ingredient, sweetener, fermenting agent like yeast or leaven and water or lactose liquid and filling agents powder to replace the vegetal flour, the filling agents powder comprising pregelatinized starch or/and vegetal proteins with prolamins natives free.

2. Fatty aery bread dough according to claim 1, wherein the filling agents comprise in mass more vegetal proteins with prolamins natives free than pregelatinized starch.

3. Fatty aery bread dough according to claim 1, wherein the filling agents comprise at least 50% in mass of pregelatinized starch.

4. Fatty aery bread dough according to claim 1 or 2, wherein the filling agents comprise at least 50% in mass of vegetal proteins with prolamins natives free.

5. Fatty aery bread dough according to any of claims 1 to 4, wherein the filling agent consists of pregelatinized starch or/and vegetal proteins with prolamins natives free

6. Fatty aery bread dough according to any of claims 1 to 5, wherein the mass ratio of vegetal flour with natural prolamins /filling agents is between 2 and 10.

7. Fatty aery bread dough according to any of claims 1 to 6, comprising fiber vegetal of type polysaccharides like inulin.

8. Fatty aery bread dough according to any of claims 1 to 7, wherein the mass ratio of flour/fat is between 4,5 and 6.

9. Fatty aery bread dough according to any of claims 1 to 8, wherein the mass ratio of flour/sugar is between 6,5 and 8.

10. Product baked from a fatty aery bread dough according to any of claims 1 to 9.
